Europäisches Patentamt

European Patent Office

Office européen des brevets

(19)

(11) Veröffentlichungsnummer: **0 024 022**

**A1**

(12) # EUROPÄISCHE PATENTANMELDUNG

(21) Anmeldenummer: **80104547.7**

(22) Anmeldetag: **31.07.80**

(51) Int. Cl.³: **H 02 G 3/16**

(30) Priorität: **13.08.79 DE 2932780**

(43) Veröffentlichungstag der Anmeldung:
**18.02.81 Patentblatt 81/7**

(84) Benannte Vertragsstaaten:
**AT BE CH DE FR LI LU NL SE**

(71) Anmelder: **SIEMENS AKTIENGESELLSCHAFT Berlin
und München**
**Postfach 22 02 61**
**D-8000 München 22(DE)**

(72) Erfinder: **Stauder, Karl**
**Eggenreuther Weg 11**
**D-8520 Erlangen(DE)**

(54) **Installationssystem.**

(57) Die Erfindung betrifft ein Installationssystem aus gegebenenfalls vorkonfektionierten Leitungen und aus Verbindungszentren, die eine vorgefertigte Verbindung auch zu mehreren Leitungen herstellen. Nach der Erfindung ist vorgesehen, daß innerhalb der Verbindungszentren (2) die Verbindungsschaltung durch in einen Anschlußrahmen (3) eingesteckte Bauteile (4, 5) gebildet ist.

FIG 2

EP 0 024 022 A1

SIEMENS AKTIENGESELLSCHAFT     Unser Zeichen
Berlin und München            VPA **79 P 4051** EUR

Installationssystem

Die Erfindung betrifft ein Installationssystem aus gegebenenfalls vorkonfektionierten Leitungen und aus Verbindungszentren, die eine vorgefertigte Verbindung auch zu
mehreren Leitungen herstellen. Ein solches Installationssystem ist seit den vierziger Jahren aus der Flugzeugtechnik bekannt (DE-PS 764 355).

Dennoch werden Installationsanlagen in Bauten und auch in
Großbauten bis heute fast ausschließlich nach konventionellen Methoden errichtet. Es werden feste Leitungen mit
Schellen verlegt, oder in Hohlschienen und Leitungskanälen untergebracht. An den Leitungsenden sind diese abzuisolieren und in Verteilungsdosen den Schaltungsgegebenheiten entsprechend zu verdrahten. Dies erfordert viel
Montageaufwand. Bei Schienensystemen können andererseits
bloß Energieverzweigungen hergestellt werden. Verknüpfungen, wie sie von Installationsschaltern zu Verbrauchern

No 2 Rat / 08.08.1979

vorzunehmen sind, lassen sich dadurch in der Regel nicht
herstellen.

Bei dem eingangs geschilderten Bordnetz für Flugzeuge sind
für einen bestimmten Flugzeugtyp ausgelegte Baueinheiten
durch vorkonfektionierte Leitungen zusammengesteckt. Ein
solches Bordnetz ist also auf einen bestimmten Flugzeugtyp zugeschnitten.

Der Erfindung liegt die Aufgabe zugrunde, ein Installationssystem zu entwickeln, das sich universell verwenden
läßt und bei dem der sonst für Montage übliche Aufwand
in eine rationellere Vorfertigung verlegt wird.

Die Lösung der geschilderten Aufgabe besteht darin, daß
innerhalb der Verbindungszentren die Verbindungsschaltung
durch in einen Anschlußrahmen eingesteckte Bauteile gebildet ist. Zum Verbinden von Leitungen entfällt dabei
das sonst übliche auf Länge bringen, Abisolieren und Verdrahten.

Die Bauteile können den einzelnen Schaltungen entsprechend
vorgefertigt werden. Dadurch kommen die Vorteile einer
großtechnischen Herstellung und einer vereinfachten Montage zusammen.

Insbesondere kann die Verbindungsschaltung im wesentlichen
durch einen Schaltungsträger festgelegt sein, der in den
Anschlußrahmen eingesteckt wird. Der Schaltungsträger kann
Energieverzweigungen und zwischen bestimmten Stellen Anschlüsse für bestimmte Installationsschalter wie Ein-Aus-
Schalter, Wechselschalter, Kreuzschalter und Serienschalter sowie für Lampen bilden.

In den Anschlußrahmen können Anschlußteile für eine Verbindung mit den Leitungen einsteckbar ausgebildet sein. Zum Anschließen der Leitungen am Verbindungszentrum können dadurch gleichfalls Bauteile der Serienfertigung verwandt werden. So können auswechselbar schraubenlose Klemmen, Schraubklemmen oder Anschlußklemmen für nicht abisolierte Leiter oder für Steckbuchsen für steckerfertig vorkonfektionierte Leitungen eingesetzt werden. Die entsprechende Aufnahme am Anschlußrahmen kann leicht handelsüblichen Bauelementen angepaßt werden.

Man kann den Anschlußrahmen auch auf eine Tragschiene aufschnappbar ausbilden. Dadurch erzielt man die Vorteile eines Schienensystems in Verbindung mit der universellen Anwendbarkeit des Installationssystems.

Wenn am Anschlußrahmen Anschlußteile so ausgebildet werden, daß ihre Einführungsöffnung senkrecht zur Rahmenebene steht, erleichtert sich die Montage an Decken.

Der Schaltungsträger kann in seinem Aufbau an den gegebenen Mengenbedarf angepaßt werden. So kann er als gedruckte Schaltung oder als integriertes Bauteil ausgebildet sein oder aus einer Verdrahtung zwischen Steckkontakten bestehen, deren Köpfe auf einer Seite einer Platte angeordnet sind und deren Steckerstifte durch die Platte hindurchgreifen. Dieser Schaltungsträger kann dann wieder in den Anschlußrahmen eingesteckt werden.

Der Schaltungsträger kann auch gekreuzte Schienen tragen, die im Kreuzungsbereich fluchtende Bohrungen aufweisen, in die Stifte der jeweiligen Schaltung entsprechend einsteckbar sind.

Die Erfindung soll nun anhand von in der Zeichnung grob schematisch wiedergegebenen Ausführungsbeispielen näher erläutert werden:

In Figur 1 ist das Prinzip des Installationssystems veranschaulicht.

In Figur 2 ist der Aufbau des Verbindungszentrums, eingeschaltet in einen durchgehenden Leitungszug, teilweise in Explosionsdarstellung und geschnitten wiedergegeben.

In Figur 3 ist ein anderes Ausführungsbeispiel der wesentlichen Bauteile des Verbindungszentrums, nämlich für den Schaltungsträger und den Anschlußrahmen dargestellt.

In Figur 4 sind ein Leitungsende mit Stecker, Anschlußelemente auf einem Anschlußrahmen sowie ein Schaltungsträger teilweise in Explosionsdarstellung wiedergegeben.

In Figur 5 ist in perspektivischer Darstellung ein herausgebrochenes Teil des Anschlußrahmens mit Anschlußelementen in Explosionsdarstellung wiedergegeben.

In Figur 6 ist anhand von zwei Verteilungszentren der Zusammenbau eines Installationssystems unter Verwendung von schraubenlosen Klemmen veranschaulicht.

In Figur 7 ist der Zusammenbau eines Installationssystems in der Darstellungsweise nach Figur 6 jedoch für Leitungen, die mit Steckern versehen sind, veranschaulicht.

In Figur 8 ist ein gemischtes System unter Verwendung von schraubenlosen Klemmen und Steckverbindungen wiedergegeben.

In Figur 9 ist die Verbindung zweier Verbindungszentren unter Verwendung eines Isolierrohres und einer Mantelleitung an einer Decke veranschaulicht.

In Figur 10 ist gezeigt, wie man zwei Verbindungszentren durch eine Mantelleitung, die an einem Zugseil aufgehängt ist, verbinden kann.

In Figur 11 ist ein anderes Ausführungsbeispiel des Installationssystems wiedergegeben, bei dem die Anschlußrahmen der Verbindungszentren auf eine Tragschiene aufschnappbar ausgebildet sind.

In Figur 12 ist eine zusätzliche Leitungsführung bei einem Schienensystem nach Figur 11 in perspektivischer Darstellung veranschaulicht.

In Figur 13 ist eine Halterung des Schienensystems nach Figur 11 dargestellt.

In Figur 14 ist der Einsatz des Installationssystems in der Zwischendecke eines Gebäudes zur Versorgung von Leuchten wiedergegeben.

In Figur 15 ist ein Verbindungszentrum in Schnittansicht und abgebrochen wiedergegeben dargestellt, bei dem Anschlußelemente mit Achsrichtung der Einführungsöffnung senkrecht zur Rahmenebene ausgebildet sind.

In Figur 16 ist ein Anschlußelement für das Verbindungszentrum nach Figur 15 in der Ausführungsform für nicht abzuisolierende Leiter in geöffnetem Zustand dargestellt.

In Figur 17 ist das Anschlußelement nach Figur 16 in geschlossenem Zustand wiedergegeben, wobei also der Kontakt zum Leiter durch den isolierenden Mantel hindurch erfolgt ist.

In Figur 18 ist ein besonderes Ausführungsbeispiel für den Schaltungsträger des Verbindungszentrums dargestellt.

In Figur 19 ist ein anderes Ausführungsbeispiel für den Schaltungsträger des Verbindungszentrums wiedergegeben.

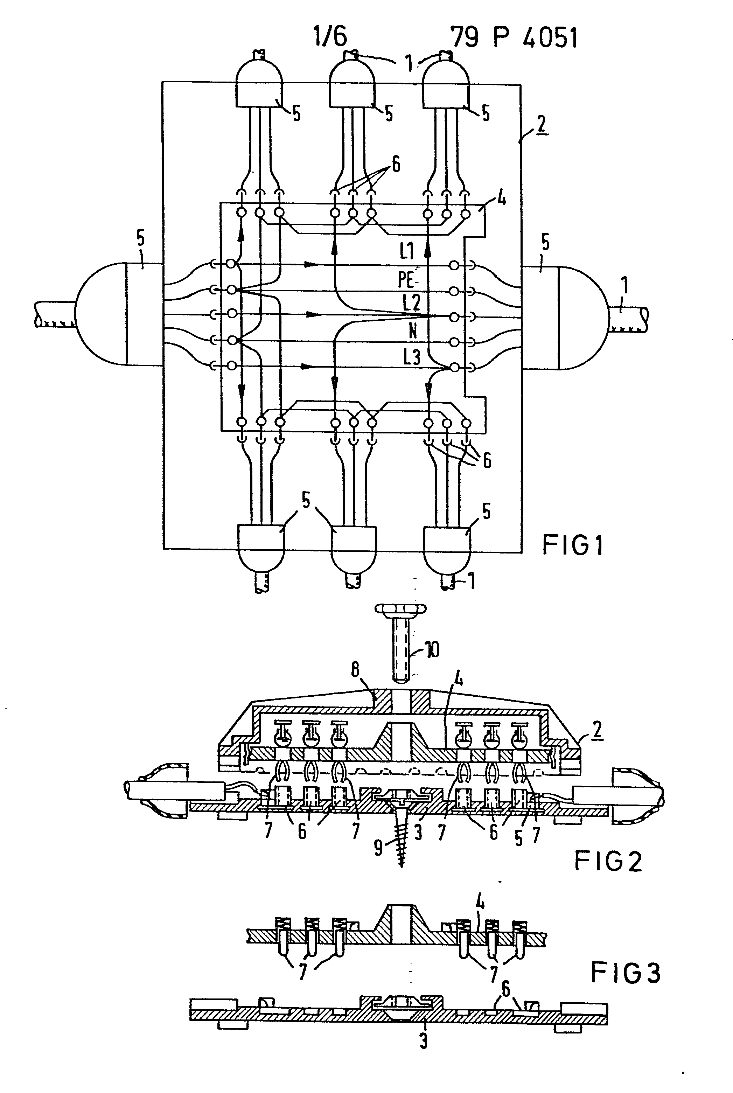

Das Installationssystem nach Figur 1 besteht aus Leitungen 1, die im Ausführungsbeispiel mit Steckern versehen sind, die also vorkonfektioniert sind und aus Verbindungszentren 2. Innerhalb der Verbindungszentren 2 wird die Verbindungsschaltung durch in einen Ausgleichsrahmen 3 - nach Figur 2 - gesteckte Bauteile 4, 5 gebildet. Die Verbindungsschaltung wird im wesentlichen durch einen Schaltungsträger 4 festgelegt, der in den Anschlußrahmen 3 einsteckbar ist. In der Prinzipdarstellung nach Figur 1 ist das Verbindungszentrum für eine Durchgangsverbindung in der Horizontalen und für sechs Wechselstromverzweigungen in der Vertikalen ausgebildet.

In Figur 2 ist ein Ausführungsbeispiel für das Verbindungszentrum des Installationssystems teilweise im Schnitt und teilweise in Explosionsdarstellung wiedergegeben. Das Verbindungszentrum 2 besteht im wesentlichen aus einem Schaltungsträger 4, der in einen Anschlußrahmen 3 einsteckbar ist. Der Schaltungsträger 4 ist in einem Gehäuse untergebracht, dessen Boden im Ausführungsbeispiel durch den Anschlußrahmen 3 gebildet ist. Die Anschlußelement 5 weisen Kontaktstücke 6 auf. Die Anschlußelemente 5 und der Schaltungsträger 4 sind Bauteile des Systems, die in den Anschlußrahmen 3 einsteckbar ausgebildet sind.

In die Kontakte 6 des Anschlußrahmens 3 greifen Gegenkontakte 7 des Schaltungsträgers 4. Der Anschlußrahmen 3, der im Ausführungsbeispiel den Gehäuseboden des Verteilungszentrums bildet, kann mittels einer Schraube 9 an einer Wand befestigt werden. Danach kann der Gehäusedeckel 8 mit dem darin gehaltenen Anschlußträger 4 aufgesetzt und zusammengeschraubt werden. Beim Anziehen der Schraube 10 wird zugleich die Verbindungsschaltung zwischen angeschlossenen oder anzuschließenden Leitungen hergestellt.

Im Ausführungsbeispiel greifen als federnde Krallen ausgebildete Kontakte in Kontakthülsen ein.

Im Ausführungsbeispiel nach Figur 3 ist der Schaltungsträger 4 mit axial abgefederten Steckerstiften, Kontakten 7 versehen, die gegen Kontaktbahnen, Kontakte 6 im zusammengebauten Zustand drücken.

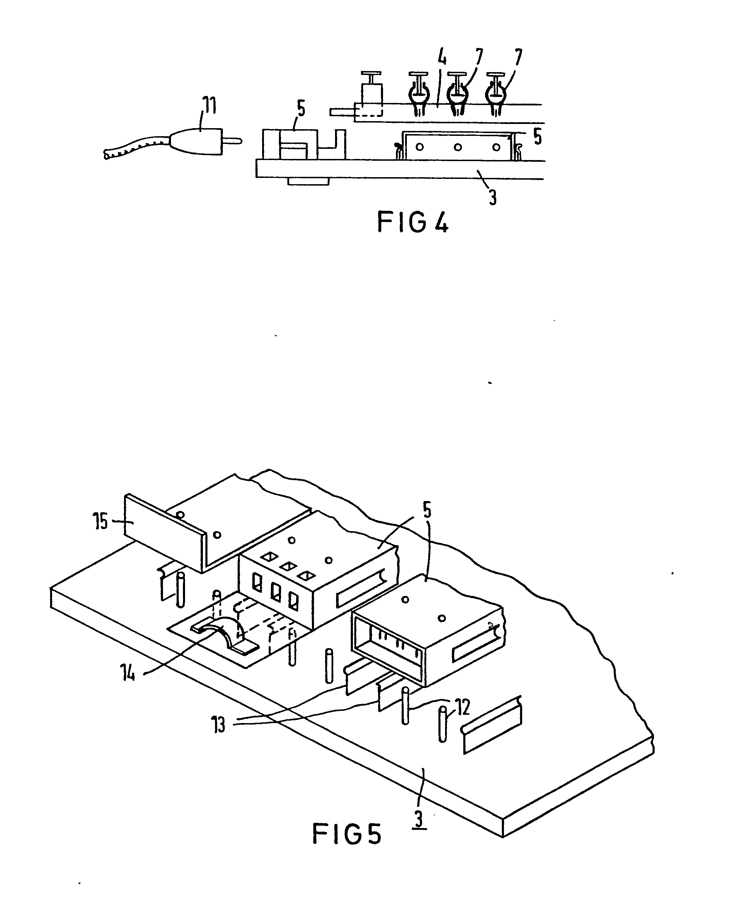

In den Anschlußrahmen 3 nach Figur 4 sind Anschlußelemente 5 eingesteckt, die Steckerbuchsen für Stecker 11 enthalten.

Die Kontakte 7 des Schaltungsträgers 4 können, wie veranschaulicht als Lyrakontakte ausgebildet sein, die auf hochkant verlaufende Schienen des Anschlußrahmens 3 aufgreifen.

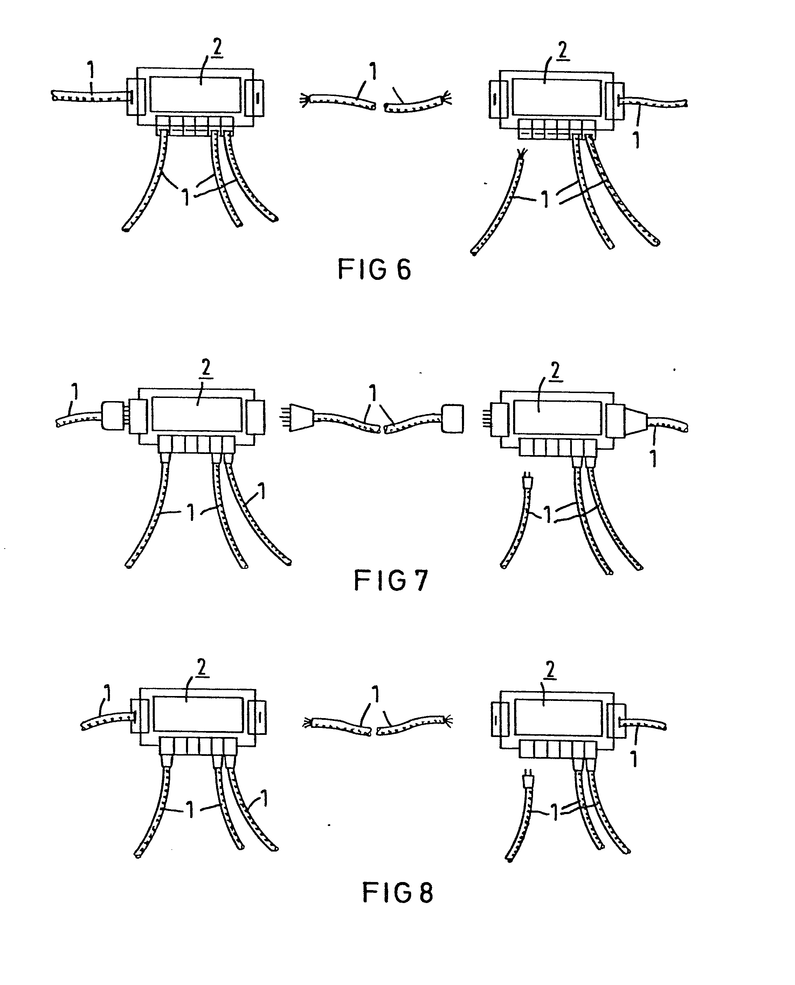

Die Anschlußelemente 5 nach Figur 5 sind durch Führungsstifte 12 geführt und von Haltefedern 13 am Anschlußrahmen 3 gehalten. Mit 14 ist eine vorgesetzte Zugentlastungslasche bezeichnet. Wo in einem Anwendungsfall ein Anschlußelement nicht einzusetzen ist, kann diese Stelle durch Abschlußstück 15 nach außen abgedeckt werden.

Aus einer Zusammenschau der Figuren 6, 7 und 8 ersieht man den Zusammenbau des Installationssystems unter Verwendung von schraubenlosen Klemmen als Anschlußelementen, Figur 6, sowie mit Steckverbindungen, Figur 7 und bei gemischter Anwendung nach Figur 8.

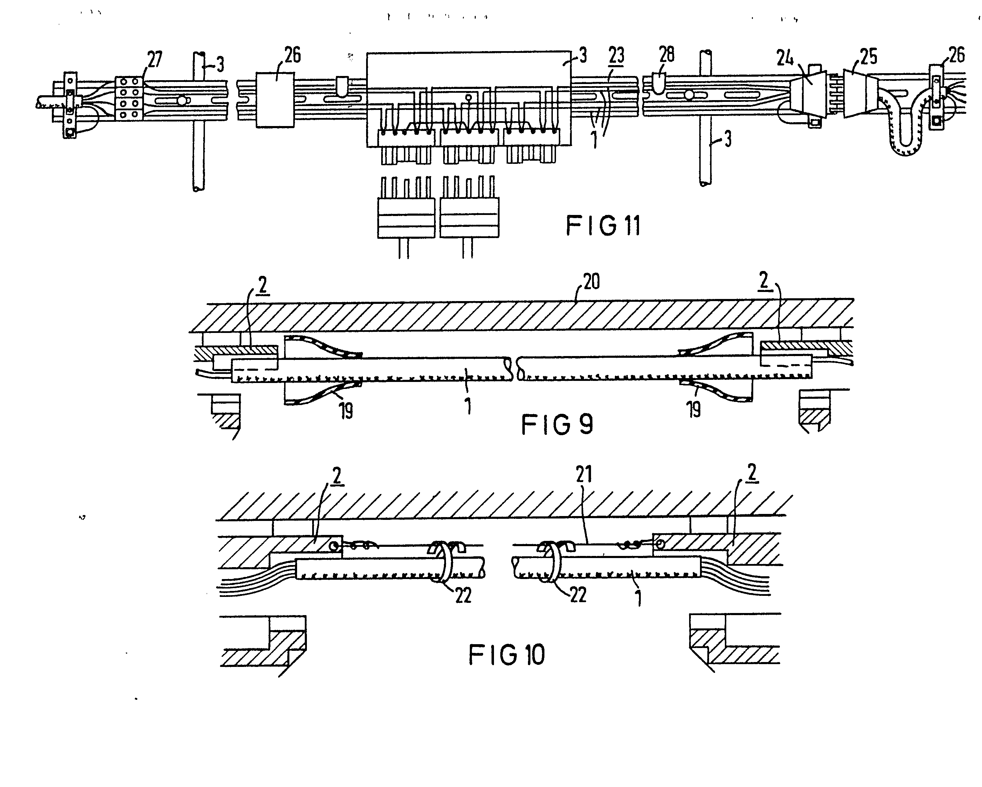

Nach Figur 9 ist die Durchgangsverbindung zwischen benachbarten Verbindungszentren 2 durch eine Leitung 1 hergestellt, die in einem Isolierrohr eingezogene Leiter enthält. Gegen axiales Verrutschen ist die Leitung durch Anschläge in den Verbindungszentren 2 und durch aufgeschobene Muffen 19 gesichert. Das Installationssystem ist im Ausführungsbeispiel an einer Decke 20, die auch als Wand aufgefaßt werden kann, angeordnet.

Größere Entfernungen zwischen zwei Verbindungszentren 2 können nach Figur 10 durch Zugseile 21 überbrückt werden, an denen mittels Haltelaschen 22 eine als Mantelleitung ausgebildete Leitung 1 gehalten ist.

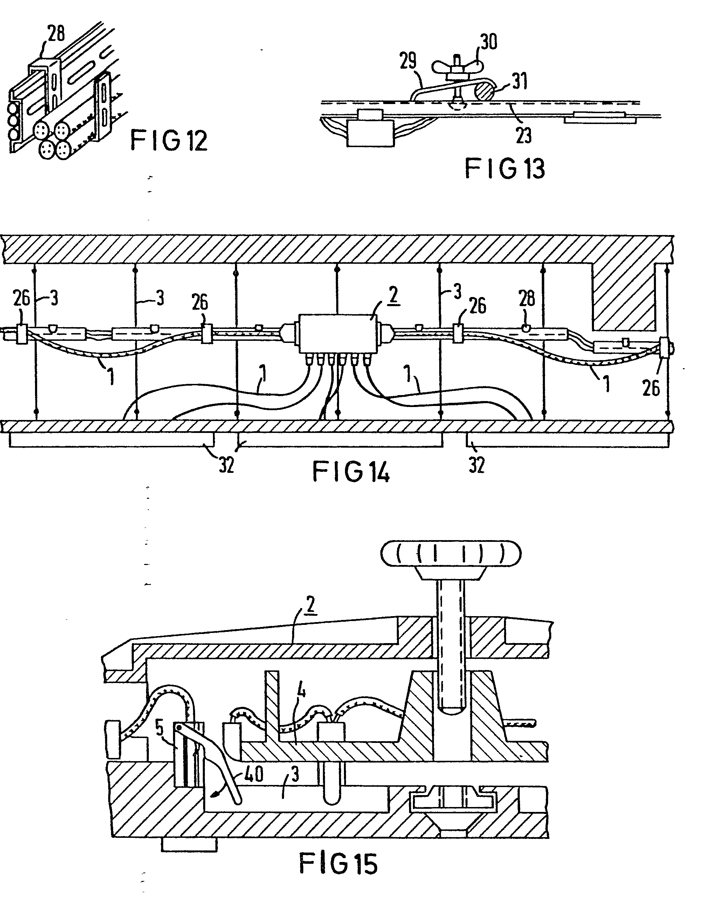

Das Installationssystem kann ein Schienensystem nach Figur 11 bilden, wenn die Anschlußrahmen 3 der Verbindungszentren 2 auf Tragschienen 23 aufschnappbar ausgebildet sind. Einzelne Schienenstränge können durch Steckverbindungsbuchsen 24 und Steckverbindern 25, die an den Schienenenden angebracht sind, elektrisch verbunden werden. Die Leitungen 1, beispielsweise Mantelleitungen, können auf der Tragschiene 23 zugleich eine Auflage finden. Gegebenenfalls können sie durch Leitungshalter 26 befestigt werden. Dünne Leitungen können statt durch Steckverbinder 24 und 25 auch durch schraubenlose Klemmen 27, die auf der Tragschiene 23 aufgebracht sind, verbunden werden.

Die Tragschiene 23 kann mittels Haltebügel 28 Leitungen des Systems oder auch zusätzliche Leitungen anderer Systeme, beispielsweise Telefonleitungen neben einem Energieversorgungssystem, halten. Man vergleiche Figur 12.

Die Tragschiene 23 des Installationssystems kann durch Bügel 29 und Schrauben 30 an Stäben 31, beispielsweise den Stäben zum Aufhängen einer Zwischendecke, gehalten werden, wie es im einzelnen aus Figur 13 zu ersehen ist.

Mit einem Installationssystem, dessen Anschlußrahmen oder Gehäuse der Verbindungszentren auf eine Tragschiene 23 aufschnappbar sind, kann man besonders leicht Deckenleuchten, beispielsweise von der Zwischendecke aus versorgen, wie es in Figur 14 veranschaulicht ist. Die Leuchten sind dort mit 32 bezeichnet.

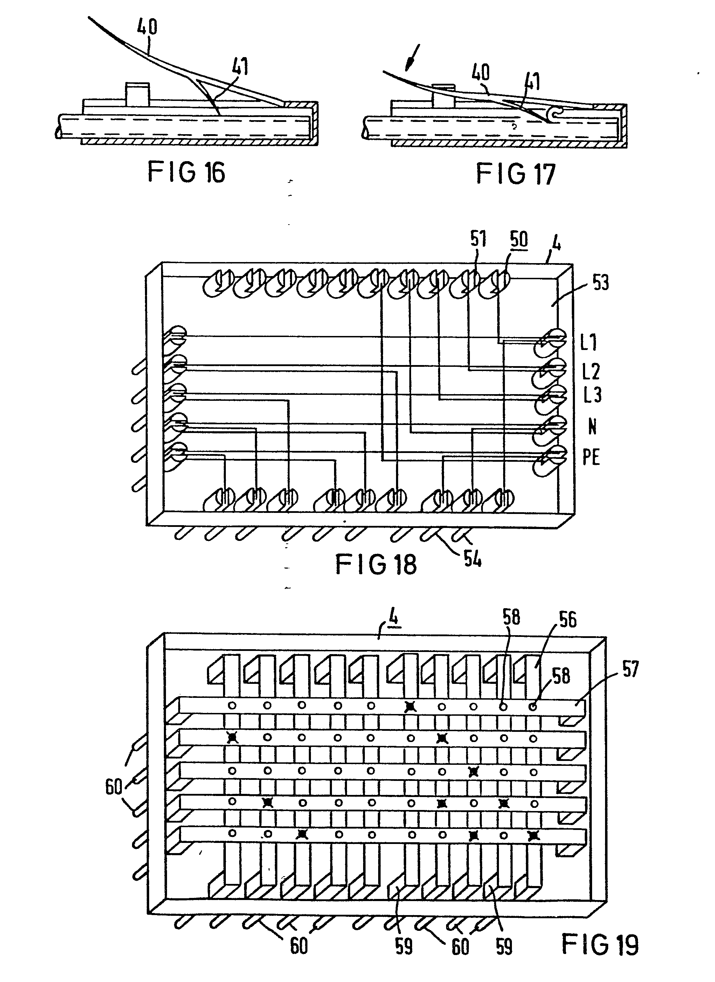

Das Verbindungszentrum 2 nach Figur 15 weist am Anschlußrahmen 3 Anschlußelemente 5 auf, deren Einführungsöffnung senkrecht zur Rahmenebene ausgebildet ist. Dadurch wird das Anschließen von ankommenden Leitungen an der Decke erleichtert. Im Ausführungsbeispiel ist das Anschlußelement 5 mit einer Anschlußklemme für nicht abisolierte Leiter dargestellt. Einzelheiten sind aus den Figuren 16 und 17 zu ersehen. Wenn der Schaltungsträger 4 in seine Kontaktstellung zum Anschlußrahmen 3 angezogen wird, drückt er dabei zugleich auf den Hebel 40, so daß das gabelförmig angesetzte Messer durch die Isolierschicht hindurch bis zum Leitungskern durchdringt.

Der Schaltungsträger 4 nach Figur 18 ist mit einer Verdrahtung zwischen Steckkontakten 50 versehen, deren geschlitzte Köpfe 51 die Enden der Verdrahtungsleiter festklemmen und Kontakt vermitteln und deren Köpfe auf einer Seite einer Platte 53 angeordnet sind. Ihre Steckerstifte 54 greifen durch die Platte 53 hindurch und können zu einem Anschlußrahmen 3 Kontakt geben. Im Ausführungsbeispiel nach Figur 18 ist die Innenverdrahtung so ausgebildet, daß einmal für Drehstrom Durchgang erreicht wird und daß drei Abzweige für Wechselstrom und ein Abzweig für Drehstrom erzielt wird.

Der Schaltungsträger 4 nach Figur 19 für ein Verbindungszentrum 2 trägt gekreuzte Schienen 56 und 57, die im Kreuzungsbereich fluchtende Bohrungen 58 aufweisen. In diese Bohrungen 58 können Stifte eingesteckt werden und Kontakt geben. Träger 59 für die Schienen können als Stifte 60 durch den Schaltungsträger 4 hindurchgreifen und Kontakt zu einem Anschlußrahmen 3, wie bereits beschrie-ben, herstellen.

8 Patentansprüche

19 Figuren

Patentansprüche

1. Installationssystem aus gegebenenfalls vorkonfektionierten Leitungen und aus Verbindungszentren, die eine vorgefertigte Verbindung auch zu mehreren Leitungen herstellen, d a d u r c h   g e k e n n z e i c h n e t, daß innerhalb der Verbindungszentren (2) die Verbindungsschaltung durch in einen Anschlußrahmen (3) eingesteckte Bauteile (4, 5) gebildet ist.

2. Installationssystem nach Anspruch 1, d a d u r c h   g e k e n n z e i c h n e t, daß die Verbindungsschaltung im wesentlichen durch einen Schaltungsträger (4) festgelegt ist, der in den Anschlußrahmen (3) einsteckbar ist.

3. Installationssystem nach den Ansprüchen 1 und 2, d a - d u r c h   g e k e n n z e i c h n e t, daß in den Anschlußrahmen (3) Anschlußelemente (5) für eine Verbindung mit den Leitungen (1) eingesteckt sind.

4. Installationssytem nach den Ansprüchen 1 und 2, d a - d u r c h   g e k e n n z e i c h n e t, daß der Anschlußrahmen (3) auf eine Tragschiene (23) aufschnappbar ausgebildet ist.

5. Installationssystem nach den Ansprüchen 1 und 2, d a - d u r c h   g e k e n n z e i c h n e t, daß am Anschlußrahmen (3) Anschlußelemente (5) mit Ausrichtung ihrer Einführungsöffnung senkrecht zur Rahmenebene ausgebildet sind (Figur 15).

6. Installationssystem nach den Ansprüchen 1 und 2, d a -
d u r c h  g e k e n n z e i c h n e t, daß der Schaltungsträger (4) mit Verdrahtung zwischen Steckkontakten
(50) versehen ist, deren Köpfe auf einer Seite einer
Platte (53) angeordnet sind und deren Steckerstifte (54)
durch die Platte (53) hindurchgreifen (Figur 18).

7. Installationssystem nach den Ansprüchen 1 und 2, d a -
d u r c h  g e k e n n z e i c h n e t, daß der Schaltungsträger (4) gekreuzte Schienen (56, 57) trägt, die
im Kreuzungsbereich fluchtende Bohrungen (58) aufweisen,
in die Stifte einsteckbar sind (Figur 19).

8. Installationssystem nach den Ansprüchen 1 und 2 und
einem der Ansprüche 3 bis 7, d a d u r c h  g e k e n n -
z e i c h n e t, daß der Schaltungsträger zwischen bestimmten Stellen Anschlüsse für bestimmte Installationsschalter, wie Ein-Aus-Schalter, Wechselschalter, Kreuzschalter und Serienschalter sowie für Lampen bildet.

0024022

**FIG1**

**FIG2**

**FIG3**

FIG 4

FIG5

FIG 6

FIG 7

FIG 8

FIG 11

FIG 9

FIG 10

FIG 12

FIG 13

FIG 14

FIG 15

FIG 16

FIG 17

FIG 18

L1
L2
L3
N
PE

FIG 19

Europäisches
Patentamt

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| X | FR - A - 2 145 409 (BULGIN)<br>* Seite 1, Zeilen 1-33; Figur 1 * <br><br>-- | 1,3,5, 8 | H 02 G 3/16 |
| | FR - A - 1 283 311 (VERGER)<br>* Seite 1, linke Spalte, Absatz 3; Figur 1 *<br><br>-- | 1-3,6 | |
| | GB - A - 1 478 111 (ELLIS)<br>* Seite 1, Zeilen 59-85; Seite 2, Zeilen 33-43; Figuren 2,4 *<br><br>-- | 1-3,8 | RECHERCHIERTE SACHGEBIETE (Int. Cl.³) |
| | DE - A - 2 060 093 (VEB)<br>* Seite 6, Absatz 2; Figur 1 *<br><br>-- | 5 | H 02 G 3/16<br>3/00<br>3/04 |
| | FR - A - 2 170 254 (SIEMENS)<br>* Seite 3, Zeilen 11-37; Figuren 4,5 *<br><br>---- | 7 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort: | Abschlußdatum der Recherche | Prüfer |
|---|---|---|
| Den Haag | 13-11-1980 | TIELEMANS |

EPA form 1503.1 06.78